# EUROPEAN PATENT SPECIFICATION

(11) **EP 4 452 873 B1**
(45) Date of publication and mention of the grant of the patent: **03.06.2026**
(21) Application number: 22840288.9
(22) Date of filing: 23.12.2022
(51) Int. Cl.: C02F 3/00, C25B 1/04, C25B 9/63, C25B 15/08

(54) **MANIFOLD FOR COLLECTING HYDROGEN GAS**
VERTEILER ZUM SAMMELN VON WASSERSTOFFGAS
COLLECTEUR POUR D'HYDROGÈNE GAZEUX

(30) Priority: 24.12.2021 GB 202119020
(43) Date of publication of application: 30.10.2024
(73) Proprietor: Wastewater Fuels Ltd, Coventry West Midlands, CV3 4LB (GB)
(72) Inventor: LATHBURY, Martyn, Leamington Spa Warwickshire CV32 5BL (GB); CARLOTTA-JONES, Daniel, Leamington Spa Warwickshire CV31 3JH (GB); STRATFORD, James, Leamington Spa Warwickshire CV32 5TR (GB)
(74) Representative: Froud, Christopher Andrew
(86) International application number: PCT/GB2022/053396
(87) International publication number: WO 2023/118905

(56) References cited:
- WO-A1-2010/049936
- CN-A- 108 796 531
- US-A- 4 042 481
- US-A1- 2006 011 491
- US-A1- 2008 292 912
- US-A1- 2010 213 076
- US-B1- 6 544 679

## Description

### Field of the Invention

The present invention relates a manifold for collecting hydrogen gas from one or more microbial electrolysis cells.

### Background to the Invention

There is widespread interest in using hydrogen gas as a potential green energy source and energy storage medium. Hydrogen is attractive because it offers a high energy density, much higher than batteries, and hydrogen can be used in a similar way to fossil fuels in existing applications. For example, hydrogen can be piped to houses to replace natural gas for heating, and hydrogen can be used instead of petrol (gasoline) or diesel in internal combustion engines for transportation. However, most hydrogen is currently derived from fossil fuels, limiting any net environmental advantage.

Hydrogen can be derived from a wide variety of wastewater sources containing organic material, such as sewage containing human waste, or liquid waste from food production such as brewing. The organic material in the wastewater can be converted into hydrogen using a microbial electrolysis cell (MEC) containing an anode and a cathode. In a microbial electrolysis cell, the anode is colonised with electroactive microorganisms which catalyse the oxidation of organic compounds in the wastewater source to carbon dioxide and hydrogen ions (H⁺). By applying a voltage to the cathode, the hydrogen ions can be reduced to hydrogen gas (H₂). The hydrogen gas that is generated can be collected and either burnt directly to generate heat or electricity, or converted directly into electricity using a hydrogen fuel cell. In either case, the only by-product is water.

There are huge quantities of wastewater produced and its safe disposal is a big problem. Conventional wastewater treatment, such as the use of activated sludge plants, require expensive infrastructure which is highly energy intensive. As a result, the safe disposal of wastewater is prohibitively expensive to many developing countries such that globally only around 20% of wastewater is treated. The rest is dumped into the ground, rivers and seas causing environmental damage and the pollution of water supplies.

Microbial electrolysis cells offer a less energy intensive, and therefore cost-effective, way to treat wastewater while making hydrogen as a useful by-product, reducing the net energy use of wastewater treatment while producing a renewable form of energy. The combustion of hydrogen generated in microbial electrolysis cells eliminates the CO₂ emissions associated with the combustion of biogas generated from wastewater in anaerobic digestors, reducing the environmental impact of wastewater treatment.

Existing microbial electrolysis cells have been custom installations in pilot plants. While these have been successful in demonstrating that microbial electrolysis cells are a viable solution for generating hydrogen while treating wastewater streams, to make the technology viable for widespread adoption a cost effective, scalable way to quickly and easily retrofit microbial electrolysis cells to existing wastewater treatment plants is needed. Such a solution requires minimal customisation of the microbial electrolysis cells and minimal modification of the existing wastewater treatment plant if it is to be widely adopted.

US 6 544 679 B1 discloses electrochemical systems, and more particularly discloses a removable electrochemical cell assembly and manifold system for receiving and interconnecting the same.

US 4 042 481 A discloses an advanced pressure electrolysis cell that combines a conventional electrolysis function with the application of external pressure on an enclosed water/electrolyte for accelerated gas passage through permeable tubular electrode walls.

### Summary of the Invention

There is provided a manifold according to the appended claims.

Generally there is provided a microbial electrolysis cell for generating hydrogen gas from wastewater. The microbial electrolysis cell comprises a cavity in an interior region of the microbial electrolysis cell for collecting hydrogen gas generated by the microbial electrolysis cell. A cathode is formed at least partially around or within the cavity, for example, such that the outermost walls of the cathode (such as the cathode current collector) define the cavity. An anode at least partially surrounds the cathode. The anode comprises a porous, electrically conductive material (such as a felt composed of carbon fibres) which can be colonised by microorganisms that can generate hydrogen gas from wastewater. The hydrogen gas thus generated collects in the cavity.

The microbial electrolysis cell has an anode surrounding the cathode. Part of the cathode defines an internal cavity within the microbial electrolysis cell where hydrogen generated by the microbial electrolysis cell can be conveniently collected. With the anode outermost, forming at least part of the external surface of the microbial electrolysis cell, the anode can be immersed in wastewater so that the wastewater soaks into the electrically conductive material of the anode. The electroactive microorganisms that have colonised the electrically conductive material can catalyse the oxidation of organic compounds in the wastewater to carbon dioxide and hydrogen ions. A potential difference between the anode and cathode drives the hydrogen ions towards the cathode, into the interior of the microbial electrolysis cell. The cathode reduces the hydrogen ions to hydrogen gas which then collects in the central cavity which acts like a pipe to direct the hydrogen gas to where it is needed, such as up towards the manifold. This design provides a self-contained microbial electrolysis cell which provides a convenient way to generate hydrogen which can be readily piped to wherever it is needed.

The microbial electrolysis cell may further comprise a head configured to couple the microbial electrolysis cell to a manifold. The head may comprise a hydrogen outlet coupled to the cavity configured to provide hydrogen to the manifold. The head may be further configured to electrically couple the anode and cathode to the manifold. The head provides a convenient way to remove the hydrogen from the microbial electrolysis cell and also provide electrical power to the microbial electrolysis cell. The head provides a straightforward way to connect or disconnect the microbial electrolysis cell with the manifold, making it easier to add or remove microbial electrolysis cells as demand changes or to allow for on demand replacement of worn, damaged or faulty microbial electrolysis cells without decommissioning the entire system.

The head may comprise a cathode connection portion configured to electrically couple the cathode to the manifold. The head may comprise an anode connection portion configured to electrically couple the anode to the manifold.

The head may comprise an insulating portion arranged to electrically isolate the cathode connection portion from the anode connection portion. The insulating portion may comprise the hydrogen outlet.

The cathode connection portion and anode connection portion may both comprise external threads configured to mate with corresponding internal threads on a manifold.

The cathode connection portion may comprise an external thread configured to mate with a retaining nut, such that when the microbial electrolysis cell is connected to a manifold, screwing the retaining nut onto the external thread:
- urges the anode connection portion of the microbial electrolysis cell into electrical contact with an anode connection portion of the manifold, thereby forming an electrical connection between the anode connection portion of the microbial electrolysis cell and the anode connection portion of the manifold; and
- urges the retaining nut into electrical contact with a cathode connection portion of the manifold (such as a cathodic surface of the manifold), thereby forming an electrical connection between the cathode connection portion of the microbial electrolysis cell and the cathode connection portion of the manifold.

The cathode connection portion may comprise a tube extending through the head to supply electrolyte (such as sodium chloride) to the cavity. The tube may be electrically conductive to electrically connect the cathode connection portion with the cathode. The tube may be in the form of a threaded cathodic bolt (suitable for receiving the retaining nut) having a central bore for supplying the electrolyte to the cavity.

The anode may comprise an anode current collector that is permeable to wastewater, to allow wastewater to soak into the electrically conductive material of the anode so that the microorganisms colonising the electrically conductive material can generate hydrogen gas from the wastewater. For example, the anode current collector may be formed from a wire mesh (such as a stainless-steel wire mesh).

The cathode may comprise a cathode current collector that is permeable to hydrogen ions, so that hydrogen ions generated in the anode can pass towards the cathode where they may be converted into hydrogen. The cathode current collector may also provide structural rigidity to the microbial electrolysis cell. For example, the cathode current collector may be formed from a rigid perforated stainless-steel pipe.

The porous electrically conductive material may be a felt comprising a mat of conductive fibres. The conductive fibres may comprise one or more of: graphite, virgin (brand new) carbon fibre, and recycled carbon fibre. Recycled carbon fibre offers significant cost savings and environmental benefits without adversely affecting performance.

The microbial electrolysis cell may further comprise an electrically insulating separator substantially permeable to hydrogen ions. The separator may be arranged between the anode and the cathode, to prevent shorting between the anode and the cathode. Suitable materials for the separator include battery separator or ion exchange membrane, such as rhinohide, porous and microporous ceramics, porous and microporous polymers like polyethylene or polyurethane, and Nafion ion exchange membrane.

The cavity may be at least partially filled with material forming part of the cathode. For example, the cavity may be filed with filaments, such as stainless-steel wool. To act as a suitable cathode, the material filling the cavity needs to be porous (to let hydrogen gas escape), conductive, corrosion resistant, catalytically active and have a high surface area. Platinum or gold wire/mesh would be ideal but are expensive. Stainless-steel filaments (bundled together in a form often known as stainless-steel wool) is a highly cost-effective option. Alternatively, bundles of fibres of conductive polymer, or a metal- or metal oxide-plated carbon or polymer felt could be used. The cathode may be treated to accelerate the conversion of hydrogen ions to hydrogen gas, for example, with an ion exchange resin (such as, Nafion) and a catalyst (e.g., Molybdenum Oxide).

Overall, the microbial electrolysis cell may be substantially cylindrical (rod-like). The anode and cathode may be substantially cylindrical (rod-like) and arranged concentrically around the cavity. A cylindrical (rod-like) shape is a convenient and cost-effective way to manufacture the microbial electrolysis cell. For example, allowing the cathode to be formed from a perforated pipe inserted inside a wire mesh tube of the anode, with other parts wrapped around or fitted between this anode and cathode structure. A cylindrical shape for the microbial electrolysis cell also makes it easier for the microbial electrolysis cell to have a cylindrical head which in turns means the manifold can have cylindrical threaded fittings to receive the head, making it straightforward to screw and unscrew the microbial electrolysis cell to and from the manifold.

The microbial electrolysis cells could have a non-circular cross-section across their width. Having a non-circular cross-section could increase the surface area of wastewater in contact with the anode 150. For example, the microbial electrolysis cells may have a stellate or corrugated (wiggly) cross-section. Some or all of the components may have the non-circular cross-section, for example, just the anode, or the anode and the cathode.

A plurality of microbial electrolysis cells may be attached to a single head. This allows multiple microbial electrolysis cells to be clustered together to share a single head, which may reduce the cost of sockets and may increase the number of microbial electrolysis cells that can be fitted onto a manifold.

According to the invention, as defined in claim 1, there is provided a manifold for collecting hydrogen gas from one or more microbial electrolysis cells.

Each microbial electrolysis cell is removably connectable to the manifold. Connecting a microbial electrolysis cell to the manifold is configured to couple a hydrogen outlet of the connected microbial electrolysis cell to a hydrogen inlet of the manifold and electrically couple the cathode and the anode of the connected microbial electrolysis cell to the manifold.

The manifold provides a cost-effective, highly scalable way to quickly and easily retrofit a microbial electrolysis cell based wastewater treatment/hydrogen generation system to existing wastewater treatment plants. A manifold (or array of manifolds) can be obtained to suit the size of the wastewater tank and microbial electrolysis cells added as needed. Further microbial electrolysis cells can be added as additional treatment capacity is required by simply attaching further microbial electrolysis cells to any spare sockets on the manifold. Additional manifolds can be added as required to increase capacity. The manifold provides all the hydrogen and electrical connections required to each microbial electrolysis cell, which means that it is not necessary to run additional pipes or wires to each cell, which reduces the cost and complexity and the number of potential points of failure. If a microbial electrolysis cell malfunctions or wears out, it is straightforward to replace it without decommissioning the entire system.

The manifold according to the invention comprises a first electrically conductive (cathodic) surface (for example, made of metal or having conductive traces on a dielectric surface) configured to electrically couple with a cathode of a microbial electrolysis cell (for example, a cathode connection portion of the manifold which is connectable to the cathode connection portion of a connected microbial electrolysis cell). The manifold further comprises a second electrically conductive (anodic) surface (for example, made of metal or having conductive traces on a dielectric surface) configured to electrically couple with an anode connection portion of a microbial electrolysis cell (for example, an anode connection portion of the manifold which is connectable to the anode connection portion of a connected microbial electrolysis cell). The cathodic and anodic electrically conductive surfaces are separated by an insulating spacer forming a void therebetween, wherein the void collects hydrogen generated by the one or more microbial electrolysis cells.

The manifold may comprise one or more interfaces each configured to receive a microbial electrolysis cell. Each interface may comprise a cathode connection portion electrically coupled to the cathodic surface and an anode connection portion electrically coupled to the anodic surface.

Each of the interfaces may comprise a socket configured to receive a microbial electrolysis cell. Each socket may further comprise a hydrogen inlet coupled to the void. The hydrogen inlet of each socket further comprises a valve configured to allow hydrogen to flow only from a microbial electrolysis cell into the void in the manifold when a microbial electrolysis cell is connected to the socket. The valve prevents hydrogen from going the other way, to prevent hydrogen leaking out of the void through any of the sockets. This valve means that individual microbial electrolysis cells may be replaced without decommissioning the entire system, and means that sockets on the manifold may be left empty initially in anticipation of future capacity upgrades without compromising the integrity of the manifold.

An anode connection may be formed in each socket of the manifold. The socket may further comprise an anode connection portion configured to electrically couple to the anode of the microbial electrolysis cell (for example, by electrically coupling to the anode connection portion of the head of the microbial electrolysis cell). The anode connection portion of the socket may be electrically coupled to the anode connected portion of the microbial electrolysis cell connected to the socket by a press fit.

A cathode connection portion may be formed in each socket of the manifold. The cathode connection portion may be configured to electrically couple to the cathode of the microbial electrolysis cell (for example, by electrically coupling to the cathode connection portion of the head of the microbial electrolysis cell). Each socket of the manifold may further comprise an insulating portion arranged to electrically isolate the cathode connection portion from the anode connection portion, to prevent shorting when the anode and cathode connection portions are both present in a single socket.

The cathode connection portion of each interface may be formed by a retaining nut fastenable to a threaded cathodic connection portion (such as a threaded cathodic bolt) extending from a microbial electrolysis cell connected to the socket. Fastening the retaining nut to the threaded cathodic connection portion:
- urges the anode connection portion of the socket against an anode connection portion of the microbial electrolysis cell connected to the socket; and
- urges the retaining nut against the cathode connection portion (such as the cathodic surface of the manifold) thereby electrically coupling the cathode connection portion of the manifold to the cathode connection portion of the microbial electrolysis cell.

The sockets may be arranged in a grid pattern (that is, comprising columns and rows of sockets). Alternatively, the sockets may be arranged in an offset grid pattern (that is, with sockets in every other row or column offset). Arranging the sockets in an offset grid pattern may help to improve efficiency by avoiding dead spots where wastewater has reduced contact with some of the microbial electrolysis cells connected to a manifold.

The cathode connection portion and anode connection portion may both comprise internal threads configured to mate with corresponding external threads on the microbial electrolysis cell.

The manifold may have a plurality of sides. Each side may have a sidewall formed by the insulating spacer. At least one of the sides may have one or more connecting members each configured to mate with a corresponding connecting member of a side of a further manifold to removably couple (mechanically and optionally electrically) the manifold with the further manifold. At least some of the sides may, additionally or alternatively, have a hydrogen coupling to mate with a corresponding hydrogen coupling on a side of a further manifold to allow hydrogen to flow between the manifold and further manifold, for example, to a shared manifold hydrogen outlet.

At least one of the connecting members on each side may comprise a cathodic electrically conductive connecting member and an anodic electrically conductive connecting member. The cathodic electrically conductive connecting member is formed from, or electrically coupled to, the cathodic electrically conductive surface. The anodic electrically conductive connecting member is formed from, or electrically coupled to, the anodic electrically conductive surface. When the cathodic and anodic electrically conductive connecting members are removably coupled to respective cathodic and anodic electrically conductive connecting members of a further manifold, an electrical connection is formed between the manifold and the further manifold. In this way, multiple manifolds can be straightforwardly electrically connected together.

A recessed portion may be formed in at least one of the sides of the manifold, for example, a recessed portion may be recessed into the insulating spacer. Each recessed portion may comprise a connecting members configured to mate with a corresponding connecting member in a recessed portion of a side of a further manifold to removably couple (mechanically and optionally electrically) the manifold with the further manifold. A recessed portion may, additionally or alternatively, contain a hydrogen coupling to mate with a corresponding hydrogen coupling in a recessed portion of a side of a further manifold to allow hydrogen to flow between the manifold and further manifold, for example, to a shared manifold hydrogen outlet. Cathodic and anodic electrically conductive connecting members may be located in the same, or in different, recessed portions on a side of the manifold.

The manifold may be configured to tesselate with two or more other manifolds. The manifold may be hexagonally shaped. Tessellating hexagonal manifolds are particularly flexible and efficient for filling vessels (such as wastewater tanks) having a wide variety of different geometries, leaving a minimum of wasted space around edges. Other possible manifold shapes include triangles, squares and pentagons, or any other suitable tessellating shape.

Furthermore, there is provided a system for generating hydrogen from wastewater. The system comprises a wastewater treatment vessel configured to hold a body of wastewater, a manifold configured according to the second aspect, and one or more microbial electrolysis cells according to the first aspect attached to the manifold. The anode of each microbial electrolysis cell is at least partially immersed in the body of wastewater.

The wastewater treatment vessel may comprise baffles positioned between sections of microbial electrolysis cells. The baffles may force the wastewater to follow a serpentine path between an inlet and an outlet of the wastewater treatment vessel thereby encouraging the wastewater to contact as many microbial electrolysis cells as possible.

### Brief Description of the Drawings

The invention shall now be described, by way of example only, with reference to the accompanying drawings, of which:
Figure 1 illustrates a wastewater treatment tank which has been retrofitted with a system for converting wastewater into hydrogen comprising a manifold and a plurality of microbial electrolysis cells;
Figure 2 shows a cross-section through a head end of a microbial electrolysis cell;
Figure 3 shows a three-dimensional view of the manifold with multiple microbial electrolysis cells attached;
Figure 4 shows the section A-A through the manifold in Figure 3 without a microbial electrolysis cell attached, showing details of the interface which allows a microbial electrolysis cell to be removably connected;
Figure 5 shows a cross-section through a head end of an alternative design for a microbial electrolysis cell;
Figure 6 shows the microbial electrolysis cell of Figure 5 removably coupled with an alternative manifold design;
Figure 7 shows the alternative manifold design having multiple ports, each for receiving a microbial electrolysis cell;
Figure 8a shows a hexagonal manifold connected with two further hexagonal manifolds via recessed connecting portions;
Figure 8b shows one of the hexagonal manifolds of Figure 12a with an upper electrically conductive surface removed to further illustrate the recessed connecting portions;
Figure 9 shows how two manifolds can be connected together using the recessed connecting portions shown in Figure 8b; Figure 10 shows a view of the underside of the manifold illustrating an alternative arrangement of microbial electrolysis cells;
Figure 11 illustrates the use of baffles in the wastewater tank between section of microbial electrolysis cells;
Figure 12 shows multiple microbial electrolysis cells clustered together to share a single head; and
Figure 13 shows an alternative shape for the microbial electrolysis cells.

### Detailed Description

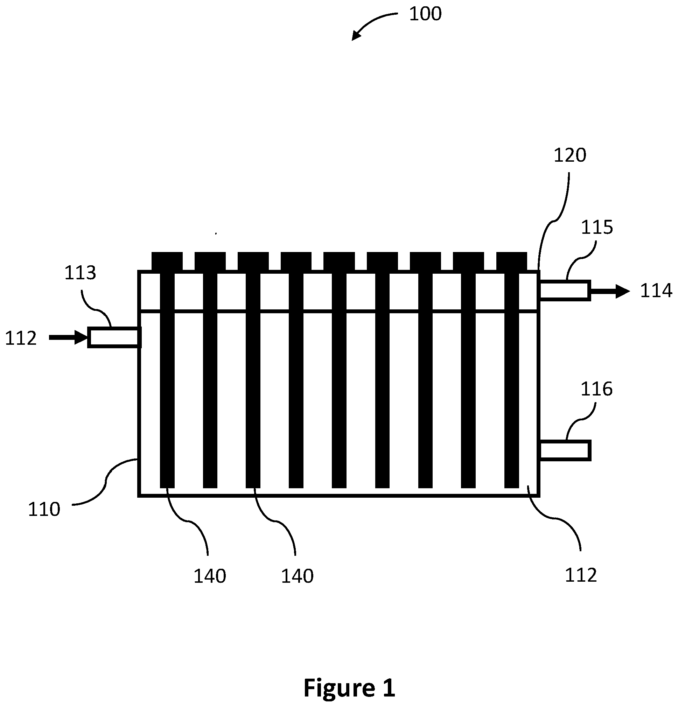

Figure 1 illustrates a wastewater treatment tank 110 which has been retrofitted with a system 100 for converting wastewater 112 into hydrogen 114.

Wastewater 112 fills the tank 110 through inlet 113. The wastewater 112 may be any domestic or industrial waste containing chemical compounds of an organic or living origin (such as sugars, animal and human waste) suspended or dissolved in water. Examples of suitable wastewater include sewage, waste from food and beverage processing (such as brewery waste or waste from ice cream production) and agricultural waste (such as slurry from animals).

A manifold 120 is suspended from or in the top of the tank 110. Multiple microbial electrolysis cells 140 are attached to the manifold 120 and immersed in the body of wastewater 112. The multiple microbial electrolysis cells 140 convert organic substances in the wastewater 112 into hydrogen 114 which collects in the manifold 120 and can be extracted thorough manifold hydrogen outlet 115. Waste residue from the process can be removed from the outlet 116 for disposal.

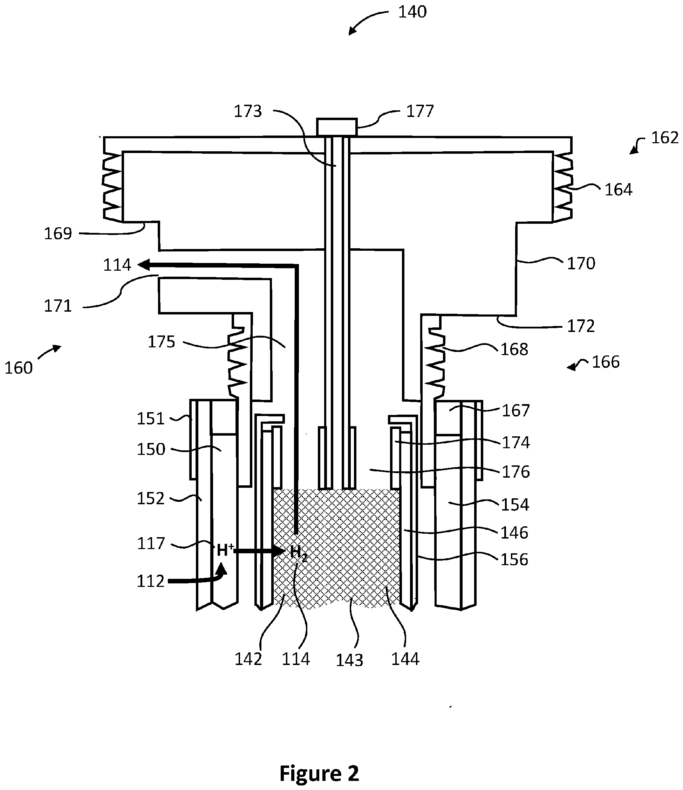

Figure 2 shows a cross-section through a head end of a microbial electrolysis cell 140.

The microbial electrolysis cell 140 is substantially cylindrical or rod-shaped with a central cavity 142 for collecting hydrogen 114. The central cavity 142 is formed from a tubular cathode current collector 146 surrounding and forming the outer walls of the central cavity 142. The cathode current collector 146 is formed from a perforated structure, such as a perforated stainless-steel pipe, which helps to provide structure and rigidity to the microbial electrolysis cell 140 without impeding the flow of hydrogen ions 117 generated at the anode 150 towards the cathode 144. The cathode current collector 146 is connected to a negative electrical supply on the manifold 120. The central cavity 142 is at least partially filled with a bundle of stainless-steel filaments 143 commonly known as stainless-steel wool which increases the surface area of the cathode while remaining permeable to allow the transfer of hydrogen gas 114 up through the microbial electrolysis cell 140 into the manifold 120. An electrolyte, such as sodium chloride, can be added to the cavity 142 to replace ions lost through electrolysis.

The anode 150 substantially surrounds the cathode 144, with the anode 150 on or adjacent to the exterior surface of the microbial electrolysis cell 140 so that as much of the anode 150 as possible is in contact with the wastewater 112. The anode 150 includes a tubular anode current collector 152 forming at least part of the exterior surface of the microbial electrolysis cell 140. The anode current collector 152 is made of a conductive mesh tube (typically a non-corrosive metal mesh such as stainless-steel) that allows wastewater 112 from the tank 110 to pass through. The anode current collector 152 is connected to a positive electrical supply on the manifold 120.

The anode 150 is separated from the cathode 144 by a separator 156 wrapped around the cathode current collector 146. The separator 156 is made of a material (such as a battery separator or ion exchange membrane) that is electrically insulating and substantially permeable to hydrogen ions 117 to prevent shorting between the anode 150 and the cathode 144 while allowing hydrogen ions 117 generated by the microorganisms in the material 154 to pass to the cathode 144 for conversion into hydrogen gas.

A gap between the anode current collector 152 and the separator 156 is filled with a porous felt material 154 made up of a mat of electrically conductive fibres which soak up the wastewater 112 from the tank 110 and favour colonisation by microorganisms that can catalyse the generation of hydrogen 114 from the wastewater 112. Carbon fibre makes a good choice for the electrically conductive fibres, and either virgin or recycled carbon fibre can be used. Recycled carbon fibre offers significant cost savings and environmental benefits without adversely affecting performance.

With the anode 150 outermost and immersed in a body of wastewater 112 in a wastewater treatment tank 110, the wastewater 112 can soak into the electrically conductive material 154 of the anode 150 and the electroactive microorganisms that have colonised the material 154 can catalyse the oxidation of organic compounds in the wastewater 112 to carbon dioxide and hydrogen ions 117. A potential difference applied between the anode 150 and cathode 144 drives the hydrogen ions 117 across the separator 156 towards the cathode 144 at the interior of the microbial electrolysis cell 140. The cathode 144 reduces the hydrogen ions 117 to hydrogen gas 114 which then collects in the central cavity 142.

The hydrogen gas 114 rises to the top of the central cavity 142 and into the manifold 140 where it can be tapped off through manifold hydrogen outlet 115.

The concentric design of the anode 150, cathode 144 and central cavity 142 allows the anode 150 to be outermost and immersed in the wastewater 112 in the wastewater treatment tank 110 and for the generation of hydrogen to be driven towards the central cavity 142 which acts as a pipe that channels the hydrogen to the manifold 120 for collection.

For manufacturing convenience, the microbial electrolysis cell 140 in this example is substantially cylindrical or rod-like, with a tubular cathode 144 and tubular anode 150 arranged substantially concentrically around the central cavity 142. However, the microbial electrolysis cell 140 can be any shape (such as a square or rectangular cross-section) which allows for a central cavity 142 surrounded by the cathode 144 where hydrogen 114 can be collected and channelled to the manifold 120, and which places the anode 150 on the outer surface of the microbial electrolysis cell 140 where the anode 150 is in contact with the wastewater 112.

The microbial electrolysis cell 140 has a head 160 that enables the microbial electrolysis cell 140 to be connected with the manifold 120. The head 160 has two functions - to allow the hydrogen 114 to be transferred to the manifold 120 for collection or use, and to provides electrical connections to the anode 150 and cathode 144 from the manifold 120.

The head 160 comprises a cathode connection portion 162 to electrically couple the cathode 144 to the manifold 120. The cathode connection portion 162 has electrically conductive external threads 164 which mate with corresponding electrically conductive internal threads 132 on the cathode socket 131 of the manifold 120. The head 160 also has an anode connection portion 166 to electrically couple the anode 150 to the manifold 120. The anode connection portion 166 has electrically conductive external threads 168 which mate with corresponding electrically conductive internal threads 138 on the anode socket 139 of the manifold 120. An insulating portion 170 (made of nylon or a similar electrically insulating material) electrically isolates the cathode connection portion 162 from the anode connection portion 166 to prevent shorting. The anode connection portion 166 is narrower (smaller diameter) than the cathode connection portion 162. This design allows the microbial electrolysis cell 140 to make independent electrical connections for the anode 150 and cathode 144 to the manifold 120.

A clamp 151, such as a jubilee clip, fastens the anode 150 to a collar 167 of the anode connection portion 166 to form a gas tight seal and electrical connection between the anode 150 and the anode connection portion 166. The insulating portion 170 has a central bore 175 leading to a hydrogen outlet 171 for directing hydrogen 114 into the manifold 120.

The cathode 144 is welded to a mounting block 174 suspended from an electrically conductive (e.g. stainless-steel) tube 173 extending through the central bore 175 from the cathode connection portion 162 to form an electrical connection between the cathode 144 and the cathode connection portion 162. Hydrogen gas travels up the central cavity 142, through openings 176 in mounting block 174 into the central bore 175 and out through the hydrogen outlet 171 into the manifold 120.

The tube 173 allows electrolyte to be added to the cavity 142, for example, to periodically top-up the level of electrolyte in the cavity 142. The tube 173 is connected to the top of the head 160 where a one-way valve 177 allows electrolyte to be added but prevents hydrogen from escaping. The one-way valve 177 may include a diaphragm that indicates the electrolyte level in the microbial electrolysis cell 140 based on the curvature of the diaphragm, in a similar way to the safety button on many jars.

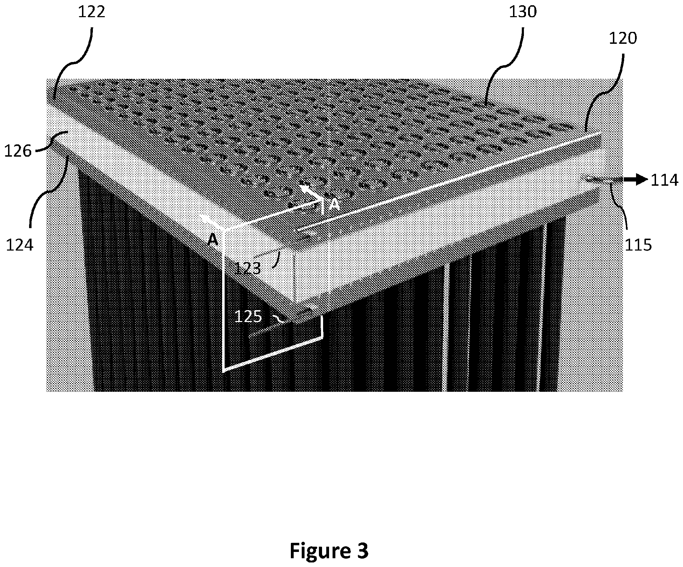

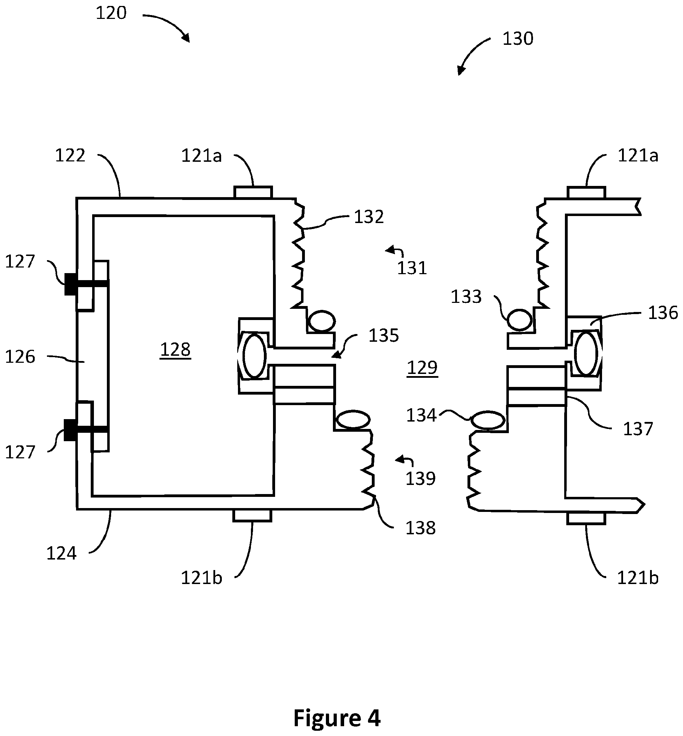

Figures 3 and 4 show the manifold 120 to which one or more microbial electrolysis cells 140 can be removably connected. Figure 3 shows a three-dimensional view of the manifold with multiple microbial electrolysis cells 140 attached. Figure 4 shows the section A-A through the manifold 140 in Figure 3 without a microbial electrolysis cell 140 attached, showing details of the socket which allows a microbial electrolysis cells 140 to be removably connected.

The manifold 120 collects hydrogen 114 generated in the connected microbial electrolysis cells 140 and also provides electrical connections to the cathode and anode of each of the connected microbial electrolysis cells 140.

The manifold 120 has an upper electrically conductive surface 122 and a lower electrically conductive surface 124. The upper and lower electrically conductive surfaces 122, 124 are made of metal (typically stainless steel) or a dielectric material with conductive traces on, or embedded in, the surface. The upper electrically conductive surface 122 is electrically connected to the positive terminal of a power supply or battery via positive feed 123 and the lower electrically conductive surface 124 is electrically connected to the negative terminal of the power supply or battery via the negative feed 125. A potential difference of around 0.5 - 1.2 V is typically applied across the positive and negative feeds 123, 125 by the power supply or battery to drive the electrolysis process.

The upper (cathodic) electrically conductive surface 122 electrically couples with the cathodes of connected microbial electrolysis cells and the lower (anodic) electrically conductive surface 124 connects with the anodes of connected microbial electrolysis cells 140. To prevent shorting, the cathodic and anodic electrically conductive surfaces 122, 124 are coupled by an insulating spacer 126 (made from nylon or another electrically insulating material) that is connected to the cathodic and anodic electrically conductive surfaces 122, 124 by fasteners 127. There is a void 128 inside the manifold 120 for collecting hydrogen 114 from the connected microbial electrolysis cells, with the hydrogen 114 extractable from the manifold 140 via manifold hydrogen outlet 115. The material of the insulating spacer 126 may provide an intrinsic seal with the cathodic and anodic electrically conductive surfaces 122, 124, otherwise separate gaskets may be provided between the cathodic and anodic electrically conductive surfaces 122, 124 and the insulating spacer 126 in order to prevent hydrogen from leaking out of the manifold 120.

The manifold 120 has a grid of sockets 130, where each socket 130 allows a single microbial electrolysis cell 140 to be connected to the manifold 120. Figure 4 shows a cross-section through one of these sockets 130 without a microbial electrolysis cell 140 connected.

The socket 130 has a cathode socket 131 and an anode socket 139. Welds (or other suitable connections) 1a provide a gas-tight electrical connection between the cathode socket 131 and the cathodic electrically conductive surface 122. Welds (or other suitable connections) 121b provide a gas-tight electrical connection between the anode socket 139 and the anodic electrically conductive surface 124. A separator 137 made from an electrically insulating material, such as nylon, separates the cathode socket 131 from the anode socket 139 to prevent shorting.

The cathode socket 131 has internal threads 132 into which the external threads 164 on the cathode connection portion 162 on the head 160 can be screwed. The anode socket 139 has internal threads 138 into which the external threads 168 on the anode connection portion 166 on the head 160 can be screwed.

Hydrogen 114 generated in the microbial electrolysis cell 140 passes out of the hydrogen outlet 171 into the region 129 between the cathode gasket 133 and the anode gasket 134. The rim 169 of the insulating portion 170 beneath the cathode connection portion 162 seals against the cathode gasket 133 and the rim 172 above the anode connection portion 166 seals against the anode gasket 134 to prevent hydrogen 114 leaking. The gaskets are made from Viton rubber or another gas-impermeable elastomer. A hydrogen path 135 is provided between the region 129 and the void 128, to transfer the hydrogen into the void 128.

A non-return valve 136 in the hydrogen path 135 allows hydrogen to flow from region 129 into the void 128 but prevents hydrogen in the void 128 from leaking out. The non-return valve also prevents hydrogen in the void 128 from leaking when a microbial electrolysis cell 140 is disconnected from the socket 130, which allows individual microbial electrolysis cells 140 to be removed or replaced without needing to decommission the entire manifold 140 allowing for online maintenance with no downtime. Any number of microbial electrolysis cells 140 can be added or removed and the system can operate normally, both electrically and in terms of hydrogen collection.

A pump (not shown) may be attached to the manifold hydrogen outlet 115 to pump the hydrogen 114 from the void 128 into a storage tank or location where it is to be used, such as a fuel cell.

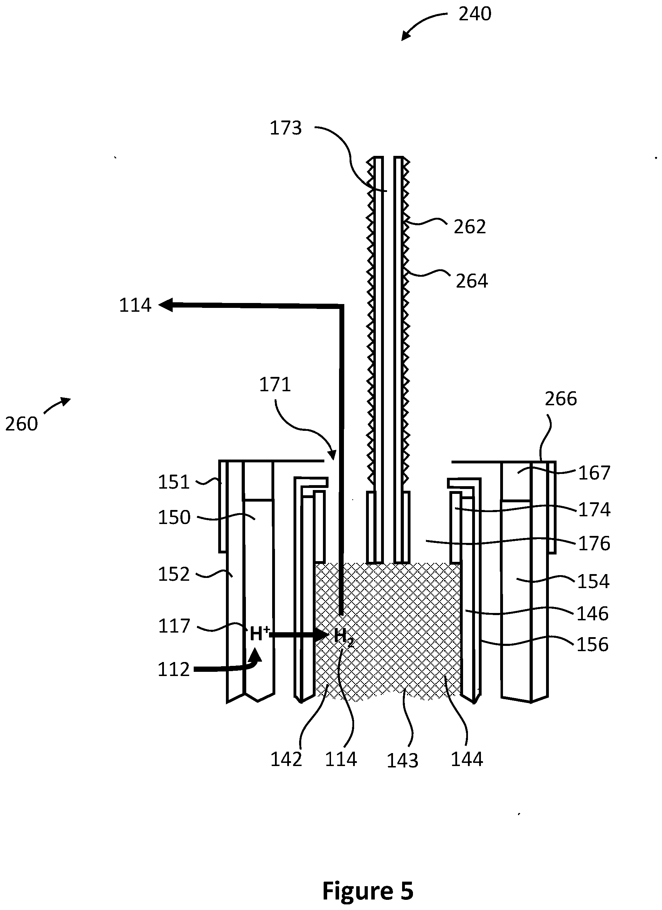

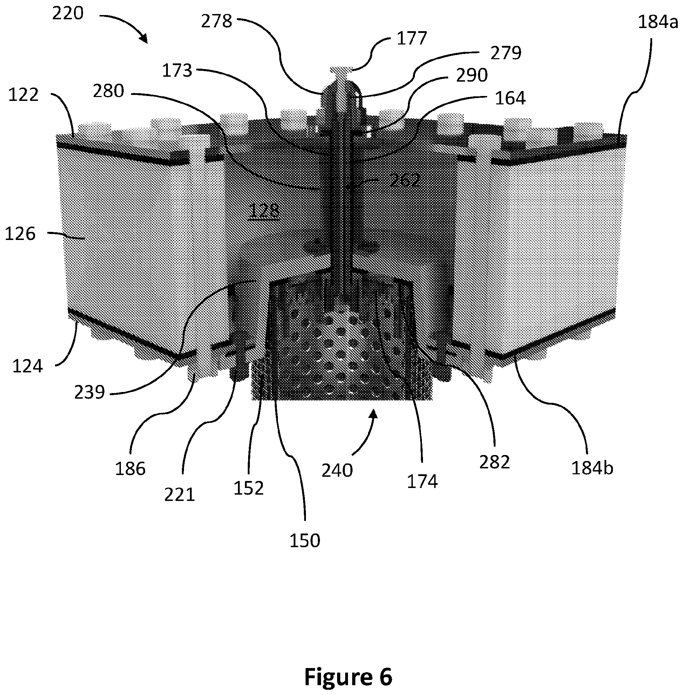

Figure 5 shows a cross-section through the head end of a microbial electrolysis cell 240 with an alternative design of head 260 for connecting with a modified manifold 220 shown in Figure 6. The modified head design makes the microbial electrolysis cell of Figure 5 and manifold of Figure 6 simpler and cheaper to manufacture.

The main difference over the microbial electrolysis cell 140 of Figure 2 is the design of the cathode connection portion 262 and anode connection portion 266. Rather than the cathode connection portion 262 and anode connection portion 266 being formed as external threads on electrically isolated portions of the same plug-like head 150 (as in Figure 2), the cathode connection portion 262 of this alternative design comprises electrically conductive threads 264 formed on the outer surface of tube 173 which is electrically coupled to the cathode 144, and the anode connection portion 266 is formed from at least the tubular anode current collector 152, and optionally from the electrically conductive clamp 151 and/or collar 167 as well.

The remaining features of the microbial electrolysis cell 240 are substantially the same as the microbial electrolysis cell 140 discussed in relation to Figure 2.

Figure 6 shows how the microbial electrolysis cell 240 of Figure 5 removably connects to the modified manifold 220. The manifold 220 has an upper (cathodic) electrically conductive surface 122 and a lower (anodic) electrically conductive surface 124. The cathodic electrically conductive surface 122 and the anodic electrically conductive surface 124 are separated by an insulating spacer 126. An upper insulating spacer gasket 184a seals the upper electrically conductive surface 122 to the insulating spacer 126 and a lower insulating spacer gasket 184b seals the lower electrically conductive surface 124 to the insulating spacer 126.

The manifold 220 has a cup-shaped anode socket 239 to receive the head 260 of the microbial electrolysis cell 240. The anode socket 239 is inserted into a port 230 in the anodic electrically conductive surface 124 and electrically coupled to the anodic electrically conductive surface 124 by fasteners 221 or by welding.

A void 128 for collecting hydrogen gas from the microbial electrolysis cell 240 is formed within the manifold 220, between the upper (cathodic) electrically conductive surface 122 and the lower (anodic) electrically conductive surface 124. Hydrogen gas generated in the microbial electrolysis cell 240 passes out of hydrogen outlet 171, through a hydrogen inlet in the anode socket 139 (not shown), and into the void 128. The hydrogen inlet in the anode socket 139 has a one-way valve which allows hydrogen to flow from the microbial electrolysis cell 240 to the void 128 but not the other way around, in order to prevent hydrogen leaking out of the void 128 when the microbial electrolysis cell is disconnected.

The manifold 220 has a hollow brace 280 interposed between the upper electrically conductive surface 122 and the anode socket 139 to provide structural rigidity to the manifold 220. The brace 180 is shown in Figure 6 to be a hollow cylinder, however other hollow shapes may also be suitable, for example a hollow rectangle.

The cathode connection portion 262 of microbial electrolysis cell 240 passes through the hollow brace 280 and out of hole 290 in the upper (cathodic) electrically conductive surface 122. An electrically conductive retaining nut 278 is screwed onto the electrically conductive external threads 164 of the cathode connection portion 262. As the retaining nut 178 is tightened, the retaining nut 178 comes into electrical contact with the upper (cathodic) electrically conductive surface 122, thereby providing an electrical connection between the cathode connection portion 262 of the microbial electrolysis cell 240 and the cathodic electrically conductive surface 122 of the manifold 220. At the same time, tightening the retaining nut 278 causes the anode 150 to be drawn into the anode socket 239 until at least the tubular anode current collector 152 is brought into contact with the anode socket 239, forming an electrical connection therebetween (and hence electrically coupling the anode 150 with the anodic electrically conductive surface). A gasket 282 is interposed between an end of the anode 150, the anode socket 239, and the cathode mounting block 174, in order to prevent hydrogen leaking.

The retaining nut 278 has a one-way valve 177 disposed through its centre, which allows electrolyte to be added to the microbial electrolysis cell 230 via tube 173 but prevents hydrogen from escaping.

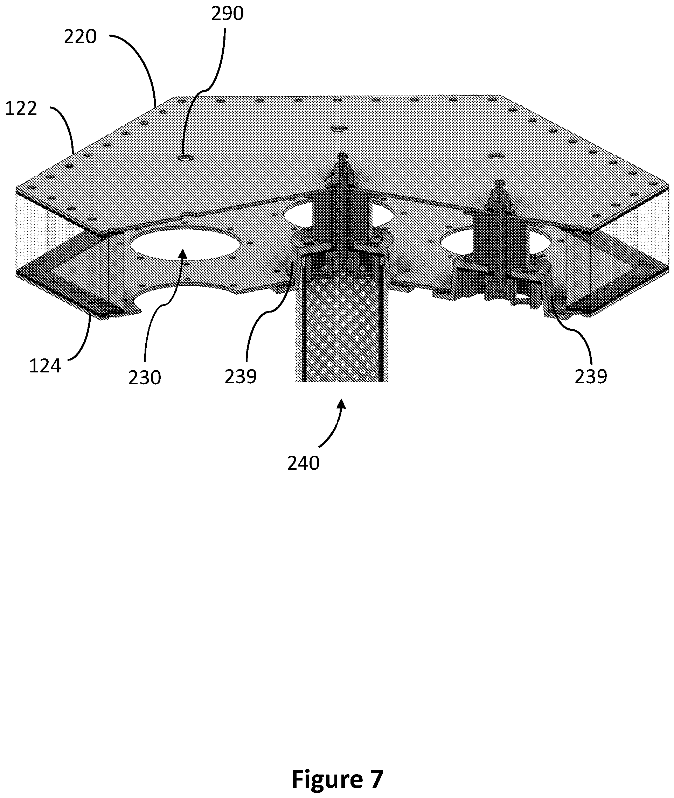

Figure 7 illustrates how the manifold 220 can be adapted to accommodate multiple microbial electrolysis cells 240. The manifold 220 can have multiple ports 230 in its lower (anodic) electrically conductive surface 124 each with a corresponding hole 190 in its upper (cathodic) electrically conductive surface 122. Each port 230 receives an anode socket 239. The head 260 of a microbial electrolysis cell 240 can be inserted into each of the anode sockets 239, passing the cathode connection portion 262 through the corresponding hole 190 and securing the microbial electrolysis cell 240 in place with a retaining nut 278 to draw the anode and cathode connection portions into electrical contact with the manifold.

The manifold 220 in Figure 7 has a hexagonal shape. Hexagonal manifolds have been found to be particularly suited to tessellating together to efficiently fill wastewater tanks of a wide variety of geometries (for example, unlike tessellating rectangular manifolds, hexagonal manifolds may efficiently fill cylindrical tanks with a minimum of wasted space around the edges). It should be appreciated that the modified manifold 220 may adopt other geometries instead, based on other tessellating shapes such as squares, rectangles, pentagons and triangles, and combinations thereof. Similarly, whilst the manifold 220 in Figure 7 has a total of seven sockets 130, any suitable number of sockets 130 may be present. The number of sockets 130 is not limited by the particular geometry of the modified manifold 220. The arrangement of Figure 7 applies equally to the manifold 120 of Figures 3 and 4.

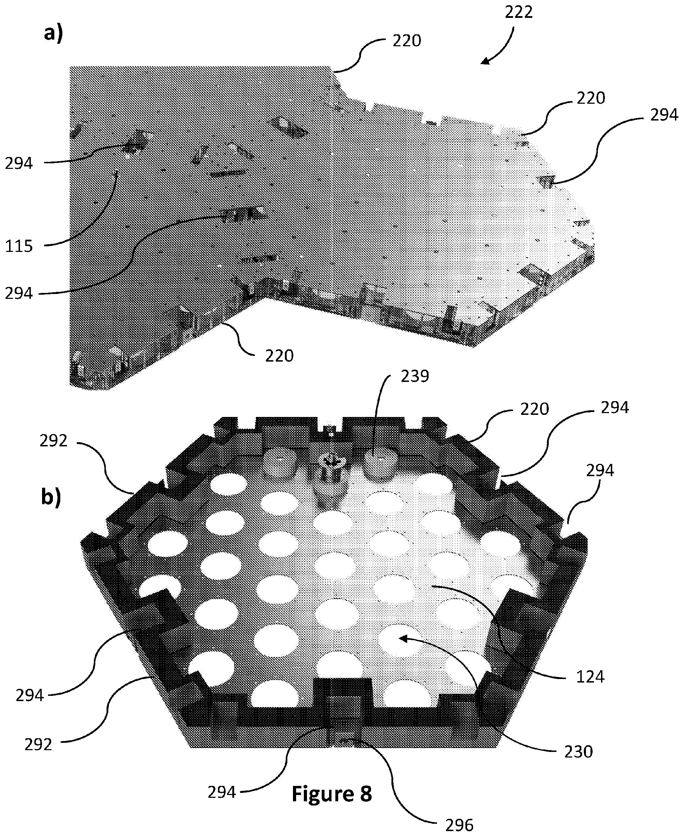

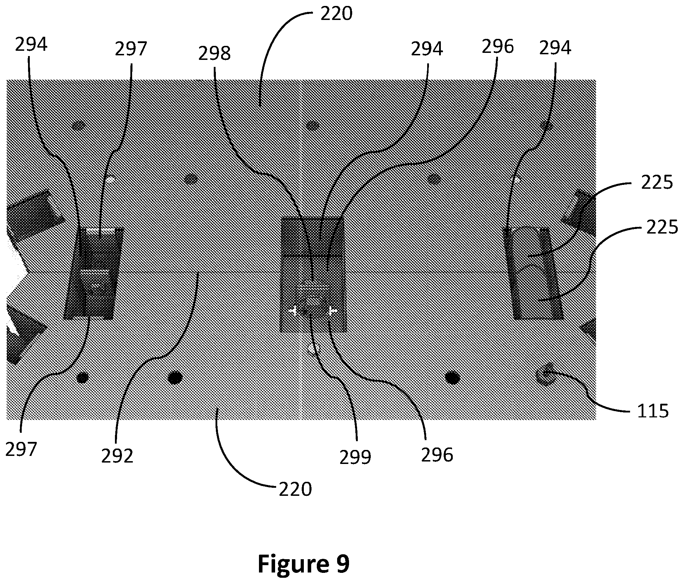

Figure 8a shows an example of how manifolds 220 can be fastened together to form a larger manifold array 222. Any number of manifolds 220 can be tessellated and fastened together in whatever configuration is necessary, for example, to fit a wastewater tank. Figure 8b shows a cross section through a manifold 220 with the upper electrically conductive surface 122 removed. Each side 292 of the manifold 220 has recessed portions 294 that have been recessed into the insulating spacer 126, shown in a close-up in Figure 9. Each recessed portion 294 contains at least one of a connecting plate (for mechanically and electrically connecting a manifold 220 with a neighbouring manifold 220) and a hydrogen coupling.

Neighbouring sides 292 of neighbouring manifolds 220 are butted up against each other, such that corresponding recessed portions 294 are aligned. Each side 292 of the manifold 220 has at least one hydrogen coupling 225 which can be connected to a hydrogen coupling 225 on a neighbouring manifold 220. The hydrogen couplings 225 may be push fit couplings or may have co-operating flanges that are bolted or clamped together. Hydrogen couplings 225 which are not connected to a neighbouring manifold 220, for example, the hydrogen couplings 225 around the outer perimeter of the manifold array 222 may be sealed with a suitable fitting to prevent hydrogen leaking from the manifold array 222. The hydrogen couplings 225 allows hydrogen gas to be transferred between a manifold 220 and a neighbouring manifold 220, for example, to a common manifold hydrogen outlet 115 to avoid the need for hydrogen gas to be piped out of each manifold 220 individually, simplifying and reducing external pipework.

In order to provide electrical connections between manifolds 220, each side 292 has at least one anodic connecting plate 296 electrically connected to the lower (anodic) electrically conductive surface 124 and at least one cathodic connecting plate 297 connected to the upper (cathodic) electrically conductive surface 122. Anodic connecting plates 296, extending from the anodic electrically conductive surface 124 of each manifold 220 are coupled together using a nut 298 and a bolt 299. Similarly, cathodic connecting plates 297 extending from the cathodic electrically conductive surface 122 of neighbouring manifolds 220 are coupled together using a nut 298 and a bolt 299. This allows the manifolds 220 in the manifold array 222 to share a common electrical connection to the anodic and cathodic electrically conductive surfaces 124, 122, simplifying and reducing external electrical wiring.

Although the invention has been described in terms of particular examples, the skilled person will appreciate that various modifications could be made which would still fall within the scope of the claimed invention.

Whilst Figures 7 to 9 have been discussed in the context of the modified manifold 220, the teaching of Figures 7 to 9 can be equally applied to the manifold 120 described in connection with Figures 3 and 4. In particular, the manifold 120 can be formed in different shapes, including hexagons, and configured to tessellate with neighbouring manifolds. The manifold 120 can have mechanical, electrical and hydrogen couplings with other manifolds 120 as shown by Figures 8 and 9.

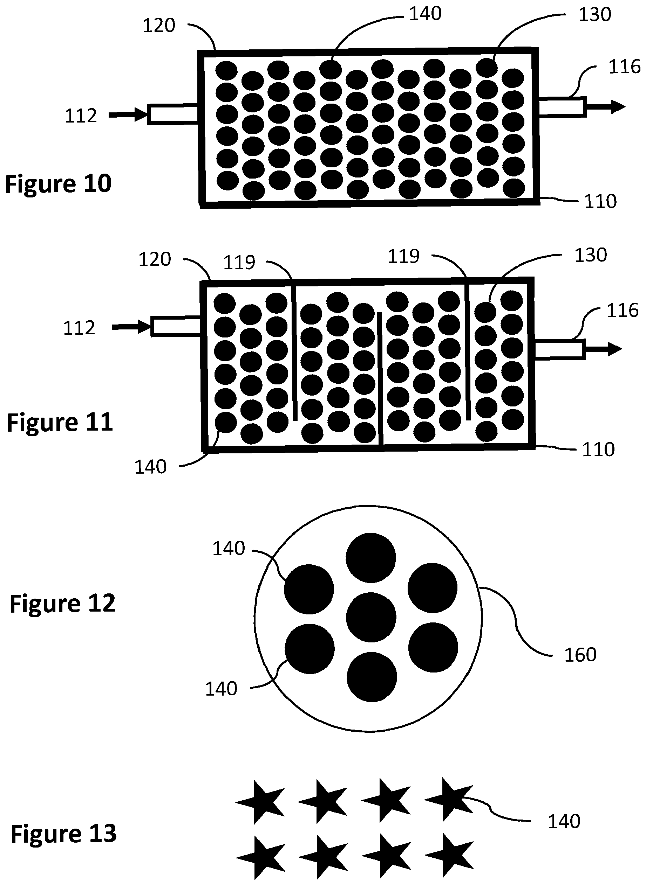

In the example of Figure 3, the manifold 120 has sockets 130 arranged in a grid pattern. However, this is just an example and other arrangements of sockets 130 could be used instead. For example, it may be desirable for microbial electrolysis cells to be aligned such that wastewater must pass around each of them and wastewater cannot form a laminar flow or unmixed flow passing between microbial electrolysis cells in such a manner as the wastewater has reduced contact with some of the microbial electrolysis cells 140, causing dead spots and reducing efficiency. Figure 10 shows a view of the underside of the manifold 120 illustrating an example of an arrangement of microbial electrolysis cells 140 where every other column of microbial electrolysis cells 140 is offset to prevent such dead spots.

Baffles 119 may be added to the wastewater tank 110, as illustrated in Figure 11. The baffles 119 may be located between sections of microbial electrolysis cells 140 to force the wastewater to follow a serpentine path between the inlet 112 and the outlet 116 which encourages the wastewater to contact as many microbial electrolysis cells 140 as possible along the way.

Although the examples of Figures 2-6 show each microbial electrolysis cell 140 having its own individual head 160, multiple microbial electrolysis cells could be clustered together to share a single head 160, as show in the example of Figure 12.

The microbial electrolysis cells 140 have been described in terms of being generally cylindrical or rod-like, that is, having a generally circular cross-section across their width. However, the microbial electrolysis cells 140 may instead have a non-circular cross-section which may increase the surface area of the wastewater in contact with the anode 150. For example, the microbial electrolysis cells 140 may have a stellate (Figure 13) or corrugated cross sections.

The arrangements illustrated by Figures 10 to 13 are equally relevant to the manifold 220 and the microbial electrolysis cell 240.

## Claims

1. A manifold (120) for collecting hydrogen gas from one or more microbial electrolysis cells (140), wherein each microbial electrolysis cell is removably connectable to the manifold (120), and wherein connecting a microbial electrolysis cell to the manifold is configured to:
couple a hydrogen outlet (171) of the connected microbial electrolysis cell (140) to a hydrogen inlet of the manifold (120); and
electrically couple the cathode (144) and the anode (150) of the connected microbial electrolysis cell to the manifold (140); wherein the manifold (120) further comprises:
a cathodic electrically conductive surface (122) configured to electrically couple with a cathode (144) of a microbial electrolysis cell (140); and
an anodic electrically conductive surface (124) configured to electrically couple with an anode (150) of a microbial electrolysis cell (140),
wherein the cathodic and anodic electrically conductive surfaces (122, 124) are separated by an insulating spacer (126) forming a void (128) therebetween for collecting hydrogen from the one or more microbial electrolysis cells (140).

2. The manifold (120) of claim 1, wherein the manifold (120) comprises one or more interfaces each configured to receive a microbial electrolysis cell (140), wherein each interface comprises a cathode connection portion electrically coupled to the cathodic electrically conductive surface (122) and an anode connection portion electrically coupled to the anodic electrically conductive surface (124).

3. The manifold (120) of claim 2, wherein each interface comprises a socket (131, 139) configured to receive a microbial electrolysis cell (140).

4. The manifold (120) of claim 3, wherein each socket (131, 139) comprises a hydrogen inlet coupled to the void (128).

5. The manifold (120) of claim 4, wherein the hydrogen inlet of each socket (131, 139) comprises a valve configured to allow hydrogen to flow only from a microbial electrolysis cell (140) to the manifold (120) when a microbial electrolysis cell is connected to the socket (131, 139).

6. The manifold (120) of any of claims 2 to 5, wherein the anode connection portion is formed in each socket, optionally wherein the anode connection portion of the socket is configured to be electrically coupled to the anode connection portion of a microbial electrolysis cell (140) connected to the socket by a press fit.

7. The manifold (120) of claim 6, wherein the cathode connection portion is formed in each socket and each socket comprises an insulating portion (170) arranged to electrically isolate the cathode connection portion from the anode connection portion.

8. The manifold (120) of claim 6, wherein the cathode connection portion of each interface is formed by a retaining nut (178) fastenable to a threaded cathodic connection portion (132) extending from a microbial electrolysis cell (140) connected to the socket,
wherein fastening the retaining nut (178) to the threaded cathodic connection portion (132):
urges the anode connection portion of the socket against an anode connection portion of the microbial electrolysis cell (140) connected to the socket; and
urges the retaining nut (178) against the cathodic electrically conductive surface (122) thereby electrically coupling the cathodic electrically conductive surface (122) to the cathodic connection portion of the microbial electrolysis cell (140).

9. The manifold (120) of either of claims 6 or 7, wherein the cathode connection portion and anode connection portion both comprise internal threads (132, 138) configured to mate with corresponding external threads (164, 168) on a microbial electrolysis cell (140).

10. The manifold (120) of any of claims 1 to 9, wherein the manifold (120) has a plurality of sides, wherein at least one of the sides (292) of the manifold (120) has one or more of:
a connecting member (296, 297) configured to mate with a corresponding connecting member on a side of a further manifold to removably couple the manifold with the further manifold, for example, to electrically couple the manifold with the further manifold; and
a hydrogen coupling (225) configured to mate with a corresponding hydrogen coupling on a side of a further manifold to allow hydrogen to be transferred between the manifold and the further manifold, for example, to a common manifold hydrogen outlet.

11. The manifold (120) of claim 10, wherein the connecting member comprises at least cathodic (297) and anodic (296) electrically conductive connecting members, wherein the cathodic electrically conductive connecting member (297) is electrically coupled to the cathodic electrically conductive surface (122) and the anodic electrically conductive connecting member (296) is electrically coupled to the anodic electrically conductive surface (124) such that, when the cathodic and anodic electrically conductive connecting members are coupled to respective cathodic and anodic electrically conductive connecting members of a further manifold, an electrical connection is formed between the manifold and the further manifold.

12. The manifold (120) of either of claims 10 or 11, further comprising a recessed portion (294) in the insulating spacer (126), wherein the recessed portion (294) comprises one or more of the connecting member and the hydrogen coupling (225).

13. The manifold (120) of any of claims 10 to 12, wherein the manifold is configured to tesselate with two or more other manifolds.

14. The manifold (120) of any of claims 10 to 13, wherein the manifold is hexagonally shaped.

## Patentansprüche

1. Verteiler (120) zur Sammlung von Wasserstoffgas aus einer oder mehreren mikrobiellen Elektrolysezellen (140), wobei jede mikrobielle Elektrolysezelle entfernbar mit dem Verteiler (120) verbindbar ist, und wobei das Verbinden einer mikrobiellen Elektrolysezelle mit dem Verteiler dazu beschaffen ist:
einen Wasserstoffauslass (171) der verbundenen mikrobiellen Elektrolysezelle (140) mit einem Wasserstoffeinlass des Verteilers (120) zu verbinden,
die Kathode (144) und die Anode (150) der verbundenen mikrobiellen Elektrolysezelle mit dem Verteiler (140) elektrisch zu verbinden, wobei der Verteiler (120) ferner umfasst:
eine kathodische elektrisch leitfähige Oberfläche (122), die dazu beschaffen ist, mit einer Kathode (144) einer mikrobiellen Elektrolysezelle (140) elektrisch verbunden zu werden, und
eine anodische elektrisch leitfähige Oberfläche (124), die dazu beschaffen ist, mit einer Anode (150) einer mikrobiellen Elektrolysezelle (140) elektrisch verbunden zu werden,
wobei die kathodischen und anodischen elektrisch leitfähigen Oberflächen (122, 124) durch einen isolierenden Abstandshalter (126) getrennt sind, der dazwischen einen Hohlraum (128) zur Sammlung von Wasserstoff aus der einen oder den mehreren mikrobiellen Elektrolysezellen (140)bildet.

2. Verteiler (120) nach Anspruch 1, wobei der Verteiler (120) eine oder mehrere Schnittstellen aufweist, die jeweils dazu beschaffen sind, eine mikrobielle Elektrolysezelle (140) aufzunehmen, wobei jede Schnittstelle einen Kathodenanschlussabschnitt umfasst, der elektrisch mit der kathodischen elektrisch leitfähigen Oberfläche (122) gekoppelt ist, und einen Anodenanschlussabschnitt, der elektrisch mit der anodischen elektrisch leitfähigen Oberfläche (124) gekoppelt ist.

3. Verteiler (120) nach Anspruch 2, wobei jede Schnittstelle eine Buchse (131, 139) aufweist, die dazu beschaffen ist, eine mikrobielle Elektrolysezelle (140) aufzunehmen.

4. Verteiler (120) nach Anspruch 3, wobei jede Buchse (131, 139) einen Wasserstoffeinlass aufweist, der mit dem Hohlraum (128) verbunden ist.

5. Verteiler (120) nach Anspruch 4, wobei der Wasserstoffeinlass einer jeden Buchse (131, 139) ein Ventil umfasst, das dazu beschaffen ist, den Fluss von Wasserstoff von einer mikrobiellen Elektrolysezelle (140) zum Verteiler (120) nur dann zuzulassen, wenn eine mikrobielle Elektrolysezelle an die Buchse (131, 139) angeschlossen ist.

6. Verteiler (120) nach einem der Ansprüche 2 bis 5, wobei der Anodenanschlussabschnitt in einer jeden Buchse ausgebildet ist, wobei der Anodenanschlussabschnitt der Buchse optional elektrisch mit dem Anodenanschlussabschnitt einer mikrobiellen Elektrolysezelle (140) verbunden ist, die durch Presspassung mit der Buchse verbunden ist.

7. Verteiler (120) nach Anspruch 6, wobei der Kathodenanschlussabschnitt in einer jeden Buchse ausgebildet ist und jede Buchse einen Isolierabschnitt (170) umfasst, der dazu beschaffen ist, den Kathodenanschlussabschnitt vom Anodenanschlussabschnitt elektrisch zu isolieren.

8. Verteiler (120) nach Anspruch 6, wobei der Kathodenanschlussabschnitt einer jeden Schnittstelle durch eine Sicherungsmutter (178) gebildet wird, die an einen mit Gewinde versehenen kathodischen Anschlussabschnitt (132) befestigbar ist, der sich von einer Elektrolysezelle (140), die mit der Buchse verbunden ist, erstreckt,
wobei das Befestigen der Sicherungsmutter (178) am mit Gewinde versehenen kathodischen Anschlussabschnitt (132):
den Anodenanschlussabschnitt der Buchse gegen einen Anodenanschlussabschnitt der mikrobiellen Elektrolysezelle (140), die mit der Buchse verbunden ist, drückt und
die Sicherungsmutter (178) gegen die kathodische elektrisch leitfähige Oberfläche (122) drückt, wodurch die kathodische elektrisch leitfähige Oberfläche (122) mit dem kathodischen Anschlussabschnitt einer mikrobiellen Elektrolysezelle (140) elektrisch verbindet.

9. Verteiler (120) nach einem der Ansprüche 6 oder 7, wobei sowohl der Kathodenanschlussabschnitt als auch der Anodenanschlussabschnitt Innengewinde (132, 138) aufweisen, die dazu beschaffen sind, mit entsprechenden Außengewinden (164, 168) an einer mikrobiellen Elektrolysezelle (140) zusammenpassen.

10. Verteiler (120) nach einem der Ansprüche 1 bis 9, wobei der Verteiler (120) eine Vielzahl von Seiten aufweist, wobei wenigstens eine der Seiten (292) des Verteilers (120) eines oder mehreres aufweist von:
einem Verbindungselement (296, 297), das dazu beschaffen ist, mit einem entsprechenden Verbindungselement an einer Seite eines weiteren Verteilers zusammenzupassen, um den Verteiler lösbar mit dem weiteren Verteiler zu verbinden, beispielsweise um den Verteiler elektrisch mit dem weiteren Verteiler zu verbinden, und
einer Wasserstoffkupplung (225), die dazu beschaffen ist, mit einer entsprechenden Wasserstoffkupplung an einer Seite eines weiteren Verteilers zusammenzupassen, um zu ermöglichen, dass Wasserstoff zwischen dem Verteiler und dem weiteren Verteiler übertragen wird, beispielsweise zu einem gemeinsamen Verteiler-Wasserstoffauslass.

11. Verteiler (120) nach Anspruch 10, wobei das Verbindungselement wenigstens kathodische (297) und anodische (296) elektrisch leitfähige Verbindungselemente umfasst, wobei das kathodische elektrisch leitfähige Verbindungselement (297) mit der kathodischen elektrisch leitfähigen Oberfläche (122) und das anodische elektrisch leitfähige Verbindungselement (296) mit der anodischen elektrisch leitfähigen Oberfläche (124) elektrisch derart gekoppelt ist, dass wenn die kathodischen und anodischen elektrisch leitfähigen Verbindungselemente mit den entsprechenden kathodischen und anodischen elektrisch leitfähigen Verbindungselementen eines weiteren Verteilers gekoppelt sind, eine elektrische Verbindung zwischen dem Verteiler und dem weiteren Verteiler gebildet wird.

12. Verteiler (120) nach einem der Ansprüche 10 oder 11, ferner umfassend einen vertieften Abschnitt (294) im isolierenden Abstandshalter (126), wobei der vertiefte Abschnitt (294) ein oder mehrere der Verbindungselemente und der Wasserstoffkupplung (225) umfasst.

13. Verteiler (120) nach einem der Ansprüche 10 bis 12, wobei der Verteiler dazu beschaffen ist, mit zwei oder mehr anderen Verteilern zu tesselieren.

14. Verteiler (120) nach einem der Ansprüche 10 bis 13, wobei der Verteiler sechseckig ist.

## Revendications

1. Collecteur (120) destiné à recueillir de l'hydrogène gazeux provenant d'une ou de plusieurs cellules d'électrolyse microbienne (140), dans lequel chaque cellule d'électrolyse microbienne peut être raccordée de manière amovible au collecteur (120), et dans lequel le raccordement d'une cellule d'électrolyse microbienne au collecteur est conçu pour :
coupler une sortie d'hydrogène (171) de la cellule d'électrolyse microbienne (140) connectée à une entrée d'hydrogène du collecteur (120) ; et
coupler électriquement la cathode (144) et l'anode (150) de la cellule d'électrolyse microbienne connectée au collecteur (120) ; le collecteur (120) comprenant en outre :
une surface de cathode électriquement conductrice (122) conçue pour être couplée électriquement à une cathode (144) d'une cellule d'électrolyse microbienne (140) ; et
une surface d'anode électriquement conductrice (124) conçue pour être couplée électriquement à une anode (150) d'une cellule d'électrolyse microbienne (140),
dans lequel les surfaces électriquement conductrices de cathode et d'anode (122, 124) sont séparées par une entretoise isolante (126) formant un espace vide (128) entre elles pour collecter l'hydrogène provenant de la ou des cellules d'électrolyse microbienne (140).

2. Collecteur (120) selon la revendication 1, dans lequel le collecteur (120) comprend une ou plusieurs interfaces, chacune étant conçue pour recevoir une cellule d'électrolyse microbienne (140), chaque interface comprenant une partie de connexion de cathode couplée électriquement à la surface de cathode électriquement conductrice (122) et une partie de connexion d'anode couplée électriquement à la surface d'anode électriquement conductrice (124).

3. Collecteur (120) selon la revendication 2, dans lequel chaque interface comprend une douille (131, 139) conçue pour recevoir une cellule d'électrolyse microbienne (140).

4. Collecteur (120) selon la revendication 3, dans lequel chaque douille (131, 139) comprend une entrée d'hydrogène couplée à l'espace vide (128).

5. Collecteur (120) selon la revendication 4, dans lequel l'entrée d'hydrogène de chaque douille (131, 139) comprend une vanne conçue pour permettre à l'hydrogène de s'écouler uniquement d'une cellule d'électrolyse microbienne (140) vers le collecteur (120) lorsqu'une cellule d'électrolyse microbienne est raccordée à la douille (131, 139).

6. Collecteur (120) selon l'une quelconque des revendications 2 à 5, dans lequel la partie de connexion d'anode est formée dans chaque douille, la partie de connexion d'anode de la douille étant, éventuellement, conçue pour être couplée électriquement à la partie de connexion d'anode d'une cellule d'électrolyse microbienne (140) connectée à la douille par un emmanchement à force.

7. Collecteur (120) selon la revendication 6, dans lequel la partie de connexion de cathode est formée dans chaque douille et chaque douille comprend une partie isolante (170) conçue pour isoler électriquement la partie de connexion de cathode de la partie de connexion d'anode.

8. Collecteur (120) selon la revendication 6, dans lequel la partie de connexion de cathode de chaque interface est formée par un écrou de retenue (178) pouvant être fixé à une partie de connexion de cathode filetée (132) s'étendant depuis une cellule d'électrolyse microbienne (140) connectée à la douille, dans lequel la fixation de l'écrou de retenue (178) à la partie de connexion de cathode filetée (132) :
pousse la partie de connexion d'anode de la douille contre une partie de connexion d'anode de la cellule d'électrolyse microbienne (140) connectée à la douille ; et
pousse l'écrou de retenue (178) contre la surface de cathode électriquement conductrice (122), ce qui permet de coupler électriquement la surface de cathode électriquement conductrice (122) à la partie de connexion de cathode de la cellule d'électrolyse microbienne (140).

9. Collecteur (120) selon l'une des revendications 6 ou 7, dans lequel la partie de connexion de cathode et la partie de connexion d'anode comprennent toutes deux des filetages internes (132, 138) conçus pour s'accoupler avec des filetages externes correspondants (164, 168) sur une cellule d'électrolyse microbienne (140).

10. Collecteur (120) selon l'une quelconque des revendications 1 à 9, dans lequel le collecteur (120) présente une pluralité de côtés, au moins l'un des côtés (292) du collecteur (120) comportant un ou plusieurs des éléments suivants :
un élément de connexion (296, 297) conçu pour s'accoupler avec un élément de connexion correspondant situé sur un côté d'un autre collecteur afin d'associer de manière amovible le collecteur à l'autre collecteur, par exemple pour associer électriquement le collecteur à l'autre collecteur ; et
un raccord pour l'hydrogène (225) conçu pour s'accoupler à un raccord pour l'hydrogène correspondant situé sur un côté d'un autre collecteur afin de permettre le transfert d'hydrogène entre le collecteur et l'autre collecteur, par exemple vers une sortie d'hydrogène commune aux collecteurs.

11. Collecteur (120) selon la revendication 10, dans lequel l'élément de raccordement comprend au moins des éléments de raccordement électriquement conducteurs de cathode (297) et d'anode (296), l'élément de raccordement électriquement conducteur de cathode (297) étant couplé électriquement à la surface électriquement conductrice de cathode (122) et l'élément de raccordement électriquement conducteur d'anode (296) étant couplé électriquement à la surface électriquement conductrice d'anode (124), de sorte que, lorsque les éléments de raccordement électriquement conducteurs de cathode et d'anode sont couplés à des éléments de raccordement électriquement conducteurs de cathode et d'anode respectifs d'un autre collecteur, une connexion électrique est établie entre ledit collecteur et l'autre collecteur.

12. Collecteur (120) selon l'une des revendications 10 ou 11, comprenant en outre une partie en retrait (294) dans l'entretoise isolante (126), la partie en retrait (294) comprenant au moins l'un parmi l'élément de connexion et le raccord pour l'hydrogène (225).

13. Collecteur (120) selon l'une quelconque des revendications 10 à 12, dans lequel le collecteur est conçu pour s'emboîter avec deux autres collecteurs ou plus.

14. Collecteur (120) selon l'une quelconque des revendications 10 à 13, dans lequel le collecteur présente une forme hexagonale.
